# EUROPÄISCHE PATENTANMELDUNG

(11) **EP 1 102 101 A1**
(43) Veröffentlichungstag der Anmeldung: **23.05.2001**
(21) Anmeldenummer: 00122755.2
(22) Anmeldetag: 19.10.2000
(51) Int. Cl.: G02B 21/00, G01N 21/64

(54) **Laserscanmikroskop**

(30) Priorität: 18.01.2000 DE 10001954; 22.11.1999 DE 19956027
(71) Anmelder: Leica Microsystems Heidelberg GmbH, 68165 Mannheim (DE)
(72) Erfinder: Engelhardt, Johann, Dr., 76669 Bad Schönborn (DE); Bradl, Joachim, Dr., 69198 Schriesheim (DE)
(74) Vertreter: Naumann, Ulrich, Dr.-Ing.

(57) **Zusammenfassung**

Ein Laserscanmikroskop, vorzugsweise ein konfokales Laserscanmikroskop, mit einer Laserlichtquelle (1) zur Beleuchtung eines Objekts (2) und einem Detektor (3) zur Detektion des vom Objekt (2) zurückkehrenden Lichts (7, 4), wobei das Objekt (2) bzw. Teile davon mit zur Emission anregbaren Markern (5) markiert ist, ist zum spezifischen Nachweis von vorzugsweise biologischen Objektstrukturen bei hoher Lokalisationsgenauigkeit der Objektstrukturen dadurch gekennzeichnet, dass die Laserlichtquelle (1) Anregungslicht (6) mit im wesentlichen einer Wellenlänge aussendet, dass gleichzeitig unterschiedliche Marker (5) verwendet werden, die bei Bestrahlung mit Anregungslicht (6) im wesentlichen gleicher Wellenlänge Licht unterschiedlicher Wellenlängen (7, 4) aussenden und dass der Detektor (3) als Multibanddetektor zur gleichzeitigen Detektion von Licht mit mehreren Wellenlängen ausgeführt ist. Ein entsprechendes Verfahren zum Nachweis vorzugsweise biologischer Objekte bzw. Objektstrukturen mittels Laserscanmikroskopie wird angegeben.

## Beschreibung

Die Erfindung betrifft ein Laserscanmikroskop, vorzugsweise ein konfokales Laserscanmikroskop, mit einer Laserlichtquelle zur Beleuchtung eines Objekts und einem Detektor zur Detektion des vom Objekt zurückkehrenden Lichts, wobei das Objekt bzw. Teile davon mit zur Emission anregbaren Markern markiert ist. Des weiteren betrifft die vorliegende Erfindung ein Verfahren zum Nachweis vorzugsweise biologischer Objekte bzw. Objektstrukturen mittels Laserscanmikroskopie, insbesondere unter Verwendung des erfindungsgemäßen Laserscanmikroskops.

Laserscanmikroskope der gattungsbildenden Art gehören seit Jahren zum Stand der Technik. Lediglich beispielhaft wird dazu auf die DE 196 27 568 A1 verwiesen. Aus der genannten Druckschrift ist ein konfokales Laserscanmikroskop bekannt, wonach eine zeitgleiche konfokale Beleuchtung einer Objektebene mit einer Vielzahl geeignet divergierender Leuchtpunkte sowie zugehörigen Abbildungsgliedern und einer Vielzahl von Pinholes zur konfokalen kontrastreichen Abbildung möglich ist. Die Einkopplung der Lichtquellen erfolgt über diffraktive Elemente.

Des weiteren wird auf die US 4,827,125 und die US 5,410,371 verwiesen, wobei bei den dort gezeigten Laserscanmikroskopen aktive optische Elemente im Strahlengang vorgesehen sind. In der US 4,965,152 werden Holographic-Notch-Filter beschrieben.

Ausgangspunkt für die hier beanspruchte Lehre ist jedenfalls die Vielfarben-Fluoreszenzmikroskopie im Rahmen der konfokalen Laserscanmikroskopie. Dort werden mit unterschiedlichen Markierungsverfahren Fluoreszenzfarbstoff-Moleküle spezifisch an biologische Objekte angebunden. Lediglich beispielhaft wird auf die bekannte "Fluoreszenz-in-situ-Hybridisierung" (FISH) verwiesen.

Die üblicherweise zur Markierung verwendeten Fluoreszenzfarbstoff-Moleküle sind problematisch aufgrund deren Bleichverhalten im Zeitverlauf. Je länger sie mit dem Fluoreszenzanregungslicht, beispielsweise Laserlicht, beaufschlagt werden, desto geringer ist deren Emission bzw. die resultierende Fluoreszenz. Des weiteren ist es bei der Mehrfach-Markierung, d.h. bei der Markierung mit unterschiedlichen Fluoreszenzfarbstoff-Molekülen unterschiedlicher Emissionswellenlänge erforderlich, die unterschiedlichen Fluoreszenzfarbstoffe aufgrund ihres relativ schmalen Absorptionsspektrums jeweils mit der passenden bzw. "richtigen" Anregungswellenlänge anzuregen. Dies erfordert in der konfokalen Laserscanmikroskopie die Verwendung mehrerer Laser mit unterschiedlichen Wellenlängen des Anregungslichts sowie den Einsatz komplizierter und dabei teurer Filtersysteme.

Ein weiteres Problem der Markierung mit herkömmlichen Fluoreszenzfarbstoffen liegt in dem äußerst breiten Emissionsspektrum der Fluoreszenzfarbstoffe im Bereich längerer Wellenlängen. Bei simultanen Mehrfach-Markierungen mit unterschiedlichen Fluoreszenzfarbstoffen führt dies zu einem sogenannten "Cross-Talk" in den einzelnen Detektionskanälen, wonach nämlich ein spektraler Anteil des nachzuweisenden Fluoreszenzlichts von einem Detektionskanal nachgewiesen wird, der aufgrund seiner spektralen Eigenschaften von diesem Detektionskanal gerade nicht nachgewiesen werden sollte.

Bei Anwendung herkömmlicher Fluoreszenzfarbstoffe zur Markierung bringt die bereits zuvor erwähnte Bleichrate den größten Nachteil für den Anwender mit sich, zumal die Bleichrate die maximale Anzahl der möglichen Aufnahmen und somit das erzielbare Signal-zu-Rausch-Verhältnis eines Objektbereichs ganz erheblich limitiert.

Des weiteren ist bei den hier zum Einsatz kommenden Multibanddetektoren das Streulicht im Hinblick auf den erzielbaren optischen Dynamikbereich limitierend. Das Prinzip des Multibanddetektors ist in der DE 43 30 447 beschrieben. Anregungslicht, welches vom Objekt reflektiert und/oder gestreut wird, wird von einem dichroitischen Strahlteiler weitgehend aus dem Detektionsstrahlengang ausgeblendet. Trotzdem gelangt ein nicht unbeachtlicher Teil des Anregungslichts in den Multibanddetektor und wird aufgrund des dortigen Detektionsprinzips - unter Verwendung eines Prismas - in Form von Streulicht auf alle Detektionskanäle verteilt. Aufgrund dieser Situation ist ein begrenzter optischer Dynamikbereich mit einem Multibanddetektor nachweisbar. Ein höherer Dynamikbereich ist mit besonderen Filtergeräten erreichbar und für manche Anwendungen im übrigen auch Voraussetzung.

Der vorliegenden Erfindung liegt nun die Aufgabe zugrunde, ein Laserscanmikroskop der gattungsbildenden Art derart auszugestalten und weiterzubilden, dass der spezifische Nachweis von vorzugsweise biologischen Objektsstrukturen mit hoher Lokalisationsgenauigkeit der Objektstrukturen möglich ist, insbesondere unter Vermeidung des in der herkömmlichen Vielfarben-Fluoreszenzmikroskopie sonst auftretenden Cross-Talk. Des weiteren liegt der vorliegenden Erfindung die Aufgabe zugrunde, ein Verfahren zum Nachweis vorzugsweise biologischer Objekte bzw. Objektstrukturen mit hoher Lokalisierungsgenauigkeit der Objektstrukturen anzugeben.

Die voranstehende Aufgabe wird - im Hinblick auf das erfindungsgemäße Laserscanmikroskop - durch die Merkmale des Patentanspruches 1 gelöst. Danach ist ein gattungsbildendes Laserscanmikroskop dadurch gekennzeichnet, dass die Laserlichtquelle Anregungslicht mit im wesentlichen einer Wellenlänge aussendet, dass gleichzeitig unterschiedliche Marker verwendet werden, die bei Bestrahlung mit Anregungslicht im wesentlichen gleicher Wellenlänge Licht unterschiedlicher Wellenlängen aussenden und dass der Detektor als Multibanddetektor zur gleichzeitigen Detektion von Licht mit mehreren Wellenlängen ausgeführt ist.

Erfindungsgemäß ist erkannt worden, dass man statt des Einsatzes mehrerer Laserlichtquellen oder statt des Einsatzes eines aufwendigen Lasers mit mehreren Wellenlängen ohne weiteres auch eine Laserlichtquelle verwenden kann, die Anregungslicht mit im wesentlichen einer einzigen Wellenlänge aussendet. Dennoch lassen sich gleichzeitig unterschiedliche Objektstrukturen bzw. unterschiedliche Bereiche der Objektstrukturen detektieren bzw. abbilden. Dies ist dann möglich, wenn gleichzeitig unterschiedliche Marker verwendet werden, die bei Bestrahlung mit Anregungslicht im wesentlichen gleicher Wellenlänge Licht unterschiedlicher Wellenlängen - je Marker-Typ - aussenden und dass der Detektor als Multibanddetektor zur gleichzeitigen Detektion von Licht mit mehreren Wellenlängen ausgeführt ist.

Erfindungsgemäß handelt es sich um eine Merkmalskombination mit synergetischem Effekt. Verwendet man nämlich ganz besondere Marker, die bei Bestrahlung mit Anregungslicht der gleichen Wellenlänge - je Marker-Typ - Licht unterschiedlicher Wellenlängen emittieren, so erübrigt sich der Einsatz verschiedener Laser bzw. eines aufwendigen Lasers mit unterschiedlichen Wellenlängen. So ist es nunmehr möglich, eine Laserlichtquelle zu verwenden, die Anregungslicht im wesentlichen einer Wellenlänge aussendet. Diese Wellenlänge reicht aus, um Emissionen unterschiedlicher Wellenlängen - der jeweiligen Marker - hervorzurufen. Ein weiterer Baustein der beanspruchten Merkmalskombination ist der zu verwendende Multibanddetektor, der zur gleichzeitigen Detektion von Licht mit mehreren Wellenlängen dient, wobei das Licht unterschiedlicher Wellenlängen aufgrund der Anregung der Marker emittiert wird.

In vorteilhafter Weise ist im Beleuchtungs-/Detektionsstrahlengang des Laserscanmikroskops ein optisches Bauteil angeordnet, welches das von der Laserlichtquelle kommende Anregungslicht zum Objekt hin reflektiert und Licht anderer Wellenlänge, insbesondere das vom Objekt zurückkehrende bzw. emittierte Licht, zum Detektor hin transmittieren läßt. Bei dem optischen Bauteil kann es sich beispielsweise um einen AOBS (Acousto-Optical Beam Splitter) handeln, der die Anregung unterschiedlicher Marker mit unterschiedlichen Intensitäten der Anregungswellenlänge ermöglicht. Dadurch können die Signal-zu-Rausch-Verhältnisse der unterschiedlichen Marker aufeinander abgestimmt bzw. angeglichen werden.

Bei dem optischen Bauteil kann es sich in vorteilhafter Weise um einen Filter, so beispielsweise um einen Langpassfilter bzw. um einen Holographic-Notch-Filter handeln. Dieser Filter wird anstelle des dort sonst üblichen dichroitischen Strahlteilers eingesetzt.

Der Spektralbereich der einzelnen Kanäle des Multibanddetektors ist in weiter vorteilhafter Weise auf die Wellenlänge des Emissionslichts der verwendeten Marker einstellbar. Durch Einstellung der Spektralbereiche der Detektionskanäle ist der Cross-Talk in den Detektionskanälen minimierbar.

Bei den verwendenden, ganz besonderen Markern handelt es sich in vorteilhafter Weise um Halbleiter-Nanokristalle. Diese Halbleiter-Nanokristalle weisen bei der FISH-Anwendung üblicherweise einen Durchmesser von ca. 2 bis 10 nm auf und emittieren auf Anregung mit Anregungslicht einer Wellenlänge Licht mit einer besonderen Wellenlänge. Ebenso ist es denkbar, dass unterschiedliche Halbleiter-Nanokristalle auf Anregung mit Anregungslicht mit einer Wellenlänge Licht mit mehreren Wellenlängen emittieren.

Bei den Markern könnte es sich ebenso um Fluorchrome handeln, die aufgrund ihres spezifischen Absorptionsspektrums von dem Anregungslicht einer Emissionswellenlänge zur Fluoreszenz anregbar sind.

Auch ist es denkbar, dass mehrere Lichtquellen vorgesehen sind, so dass die Marker mit Anregungslicht unterschiedlicher Wellenlängen angeregt werden. Insbesondere wenn unterschiedliche Halbleiter-Nanokristalle Fluoreszenzlicht mit unterschiedlichen Intensitäten emittieren, wäre eine Anregung der Marker mit mehreren Lichtquellen vorteilhaft, da dann die Lichtintensität der Anregungslichtquellen derart eingestellt werden kann, dass nunmehr das Emissionslicht der unterschiedlichen Halbleiter-Nanokristalle ähnliche Dynamikbereiche bzw. die so detektierten Signale ein ähnliches Signal-zu-Rausch-Verhältnis aufweisen. In diesem Fall wäre der Einsatz eines AOBS (Acousto-Optical Beam Splitter) zur Trennung von Anregungs- und Detektionslicht zweckmäßig.

Die Vorteile der in erfindungsgemäßer Weise vorgesehenen Markierung sind darin zu sehen, dass die hier verwendeten Marker ein schmales Emissionsspektrum aufweisen, so dass bei Verwendung mehrerer unterschiedlicher Marker - beispielsweise Halbleiter-Nanokristalle - der nachteilige Cross-Talk reduzierbar ist. Mehrere unterschiedliche Halbleiter-Nanokristalle könnten mit einer einzigen Wellenlänge angeregt werden, so dass hier von einem quasi-kontinuierlichen Absorptionsspektrum auszugehen ist. Eine Laserlichtquelle ist zum Betrieb des hier beanspruchten Laserscanmikroskops ausreichend, wobei anstelle des sonst üblichen dichroitischen Strahlteilers ein Langspassfilter bzw. Holographic-Notch-Filter verwendet wird.

Die hier als Marker bevorzugt zu verwendenden Halbleiter-Nanokristalle lassen sich spezifisch an biologische Objekte anbinden, so dass aufgrund des unterschiedlichen Emissionsverhaltens Multicolor-Anwendungen möglich sind. Ausserdem zeigen die Halbleiter-Nanokristalle eine wesentlich geringere Bleichrate als herkömmliche Fluoresenzfarbstoffe. Die Größe der Halbleiter-Nanokristalle ist im Vergleich zu der Größe der Fluoreszenzmoleküle geringer, so dass die spezifische Anbindung der Halbleiter-Nanokristalle qualitativ besser ist, dass nämlich die Halbleiter-Nanokristalle näher am eigentlichen Objekt bzw. Objektbereich als Fluoreszenzmoleküle anbringbar sind. Dies führt zu einer besseren Lokalisationsgenauigkeit.

Die "Lebensdauer" des angeregten Zustands der Halbleiter-Nanokristalle ist verglichen zu den Lebensdauern herkömmlicher Fluoreszenzfarbstoffe äußerst hoch, sie beträgt nämlich einige 100 ns. Diese Eigenschaft der Halbleiter-Nanokristalle könnte zur Verringerung bzw. Vermeidung von Rückreflexen und/oder von Streulicht des vom Objekt kommenden unerwünschten Anregungslichts genutzt werden. Hierzu könnte die Anregung der Marker mit Hilfe von gepulstem oder intensitätsmoduliertem Anregungslicht geeigneter Anregungswellenlänge erfolgen, beispielsweise mit einem gepulsten Laser. Eine Intensitätsmodulation des Anregungslichts bei der Verwendung einer Lichtquelle mit einer konstanten Emissionsintensität könnte mit einem aktiven oder passiven optischen Bauteil erzielt werden, wobei eine schnelle Intensitätsmodulation vorzugsweise mit einem aktiven optischen Bauteil, beispielsweise einem AOTF (Acousto-Optical-Tunable-Filter), realisierbar ist. Hierzu könnte eine Synchronisation des gepulsten bzw. intensitätsmodulierten Anregungslichts mit dem Scan- und/oder Detektionsvorgang des Laserscanmikroskops vorgesehen sein. Diese Synchronisation ermöglicht eine Anregung der Marker mit gepulstem/intensitätsmoduliertem Anregungslicht insbesondere dann, wenn die Scaneinrichtung des Laserscanmikroskops auch wirklich den zu detektierenden Objektbereich beleuchtet. Ab dem Zeitpunkt eines solchen Lichtpulses, also mit der Anregung von Markern an dem zu detektierenden Objektbereich, kann für einen einstellbaren Meßzeitraum entweder sofort oder nach einem kurzen Zeitversatz das von den Markern ausgesendete Fluoreszenzlicht detektiert werden.

Idealerweise läßt sich der zeitliche Versatz derart einstellen, dass die Signalausbeute der zu detektierenden Marker maximiert wird. Ein entsprechender Zeitversatz könnte durch einen lateralen Versatz des Detektionspinholes im Detektionsstrahlengang realisiert werden, der sich aus der Gesamtvergrößerung des Abbildungssystems und der Scangeschwindigkeit ergibt. Auch eine entsprechende künstlich eingeführte "Totzeit" des Detektors bei einer unveränderten Pinholeposition im Detektionsstrahlengang wäre denkbar. Somit ist für den Detektor dann nur noch das Fluoreszenzlicht der Marker detektierbar, nicht jedoch der unerwünschte Rückreflex bzw. das unerwünschte Streulicht des Anregungslichts. Diese Vorgehensweise ermöglicht in vorteilhafter Weise die Verwendung eines bezüglich der verwendeten Wellenlängen unspezifischen optischen Filters anstelle des normalerweise verwendeten dichroitischen Strahlteilers. Der unspezifische optische Filter könnte für den gesamten Wellenlängenbereich bspw. ein Transmissionsvermögen von größer als 80% und ein Reflexionsvermögen von kleiner als 20% aufweisen, was die Materialkosten reduziert.

Eine hohe Lebensdauer von einigen 100 ns der Marker, insbesondere der Halbleiter-Nanokristalle, wirkt jedoch begrenzend in Bezug auf die maximal detektierbare Signalausbeute. Wenn das Anregungslicht des Laserscanmikroskops im Fokus eine durchschnittliche Verweildauer von beispielsweise 2 µs an einer bestimmten Probenposition hat, durchlaufen die Marker mit einer hohen Lebensdauer nicht so viele Anregungs- und Emissionszylken, als das bei einer geringeren Lebensdauer von beispielsweise 10 ns der Fall wäre. Deshalb wird in diesem Beispiel das von den Markern emittierte Licht um einen Faktor 10 verringert bzw. die Sättigungsrate der Marker wird 10 mal so schnell erreicht. Ein Grund für eine hohe Lebensdauer der Marker ist, dass sich das Fluoreszenzmolekül bzw. das Halbleiter-Nanokristall in einem angeregten Zustand befindet, aus dem der Übergang zurück in den Grundzustand aufgrund von Energie- und Impulserhaltungssätzen verboten ist. Um dennoch die Lebensdauer der angeregten Fluoreszenzmoleküle bzw. der Halbleiter-Nanokristalle herabzusetzen bzw. die Übergänge in den Grundzustand zu beschleunigen, wird mit einer zusätzlichen Energiequelle elektomagnetische Strahlung in die Fokusregion gebracht. Dadurch können Drehimpuls- bzw. Spin-Übergänge induziert werden, so dass der Übergang in den Grundzustand dann nicht mehr verboten ist. Somit erfolgt der Übergang in den Grundzustand spontan, was einer Herabsetzung der Lebensdauer entspricht.

Das Einbringen zusätzlicher elektomagnetischer Energie in den Fokus könnte im Fall der Spin-Resonanz durch einen geeigneten Sender im Radiowellenlängenbereich realisiert werden, der bspw. an Stelle des Kondensors direkt im Mikroskopstativ integriert werden könnte. Die zuzuführende Energie kann eine Wellenlänge aufweisen, die in Abhängigkeit von der Art der verwendeten Marker aus einem Bereich gewählt wird, der sich vom Radiowellenlängenbereich bis hin zum sichtbaren oder gar zum UV-Wellenlängenbereich erstrecken kann. Wenn als zusätzliche elektomagnetische Energie bspw. zusätzlich sichtbares Licht einzubringen ist, könnte dies durch eine geeignete weitere Lichtquelle (z.B. Laser) erfolgen, die dem eigentlichen Anregungslicht koaxial überlagert wird. Auch wäre die Einkopplung einer oder mehrerer zusätzlicher Moden der einzig verwendeten (Laser)-Lichtquelle möglich, wobei der Energieunterschied der Moden an den zu erzielenden Energie-Übergang angepaßt ist.

Die zusätzlich eingebrachte elektomagnetische Energie könnte ebenfalls gepulst oder intensitätsmoduliert und darüber hinaus mit dem Scan- und/oder Detektionsvorgang des Laserscanmikroskops synchronisierbar sein. Insbesondere kann die Puls- oder Intensitätsmodulationsfolge der elektromagnetischen Strahlung zur Puls- oder Intensitätsmodulationsfolge des Anregungslichts einen einstellbaren zeitlichen Versatz aufweisen. Dieser zeitliche Versatz kann derart gewählt werden, dass eine Maximierung der Signalausbeute der zu detektierenden Marker erzielt wird.

Als zeitliche Intensitätsverläufe des gepulsten/intensitätsmodulierten Anregungslichts und/oder der zusätzlich eingebrachten elektomagnetischen Energie sind Rechteck- Sägezahn-, Dreiecksverläufe, periodisch wiederkehrende oder zufällige Intensitätsverläufe denkbar.

Im Hinblick auf das beanspruchte Verfahren ist die voranstehende Aufgabe durch die Merkmale des Patentanspruches 25 gelöst. Danach ist ein Verfahren zum Nachweis vorzugsweise biologischer Objekte bzw. Objektstrukturen mittels Laserscanmikroskopie, wobei das Objekt mit einer Laserlichtquelle beleuchtet und das vom Objekt zurückkehrende Licht von einem Detektor detektiert wird und wobei das Objekt bzw. die Objektstrukturen mit zur Emission anregbaren Markern markiert ist bzw. sind, dadurch gekennzeichnet, dass die Laserlichtquelle Anregungslicht mit einer Wellenlänge aussendet, dass gleichzeitig unterschiedliche Marker verwendet werden, die bei Bestrahlung mit Anregungslicht gleicher Wellenlänge Licht unterschiedlicher Wellenlängen aussenden und dass der Detektor als Multibanddetektor gleichzeitig Licht mit mehreren Wellenlängen detektiert. Hinsichtlich der einzelnen Verfahrensschritte wird auf die voranstehende Beschreibung des beanspruchten Laserscanmikroskops sowie auf die das Verfahren betreffenden Patentansprüche verwiesen.

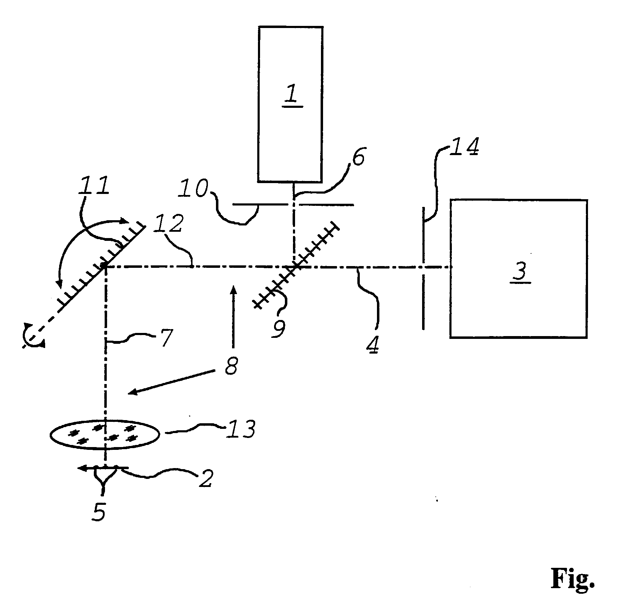

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
die einzige Figur in einer schematischen Darstellung den prinzipiellen Aufbau eines erfindungsgemäßen Laserscanmikroskops, wonach eine mit unterschiedlichen Markern markierte Probe mit Anregungslicht nur einer Anregungswellenlänge anregbar sind.

Die einzige Figur zeigt in schematischer Darstellung ein Ausführungsbeispiel eines erfindungsgemäßen Laserscanmikroskops, wobei es sich dabei um ein konfokales Laserscanmikroskop handelt. Das Laserscanmikroskop umfasst eine Laserlichtquelle 1 zur Beleuchtung eines Objekts 2 und einen Detektor 3 zur Detektion des vom Objekt 2 zurückkehrenden Lichts 4. In der Figur ist lediglich angedeutet, dass das Objekt 2 bzw. Teile davon mit zur Emission anregbaren Markern 5 markiert ist. Die Darstellung der Marker 5 ist lediglich symbolisch.

Erfindungsgemäß sendet die Laserlichtquelle 1 Anregungslicht 6 mit im wesentlichen einer Wellenlänge aus. Gleichzeitig werden unterschiedliche Marker 5 verwendet, die bei Bestrahlung mit Anregungslicht 6 im wesentlichen gleicher Wellenlänge Licht 7 unterschiedlicher Wellenlängen aussenden. Der Detektor 3 ist als Multibanddetektor zur gleichzeitigen Detektion von Licht 7 bzw. 4 mit mehreren Wellenlängen ausgeführt.

Die einzige Figur zeigt des weiteren, dass im Beleuchtungs-/Detektionsstrahlengang 8 ein optisches Bauteil 9 angeordnet ist, welches das von der Laserlichtquelle 1 kommende Anregungslicht 6 zum Objekt 2 hin reflektiert und Licht anderer Wellenlänge, insbesondere das vom Objekt 2 zurückkehrende Licht 4 zum Detektor 3 hin transmittieren läßt. Bei dem optischen Bauteil 9 handelt es sich um einen Filter, im Konkreten um einen Holographic-Notch-Filter, der in der Figur lediglich symbolisch dargestellt ist.

Wesentlich ist, dass die simultane Verwendung verschiedener Marker 5, insbesondere verschiedener Halbleiter-Nanokristalle, mit einem modifizierten Laserscanmikroskop möglich ist. Da sich die verschieden emittierenden Halbleiter-Nanokristalle aufgrund ihrer spezifischen Eigenschaften mit gleicher Wellenlänge zur Emission bzw. Fluoreszenz anregen lassen, ist es möglich, eine einzige Laserlichtquelle 1 zu verwenden. Dies reduziert die Kosten des Gesamtsystems, da nämlich der Einsatz mehrerer Laserlichtquellen bzw. der Einsatz eines Speziallasers mit Anregungslicht unterschiedlicher Wellenlängen nicht mehr erforderlich ist.

Die einzige Figur läßt des weiteren erkennen, dass das Anregungslicht 6 von der Laserlichtquelle 1 ein der Laserlichtquelle 1 nachgeordnetes Anregungspinhole 10 hindurchtritt und auf den Filter 9 trifft. Der Filter 9 ist so ausgelegt, dass er Licht aller Wellenlängen transmittieren kann, mit Ausnahme des äußerst schmalen spektralen Bereichs der Laserlichtquelle 1. Das Anregungslicht 6 der Laserlichtquelle 1 wird in Richtung eines Scanspiegels 11 reflektiert und durchläuft entlang der optischen Achse 12 ein Objektiv 13. Das von der Laserlichtquelle 1 angeregte und vom Objektiv 13 gesammelte Fluoreszenzlicht der hier als Marker 5 verwendeten Halbleiter-Nanokristalle im Objekt 2 bzw. das emittierte Licht 7 durchläuft den Beleuchtungs-/Detektionsstrahlengang 8 in umgekehrter Richtung, bis es auf den Holographic-Notch-Filter 9 trifft. Dieser Filter 9 läßt einen vom Objekt 2 kommenden Anteil 4 des emittierten Lichts 7 passieren, so dass Fluoreszenzlicht-Beiträge aus der Fokalregion gemäß dem konfokalen Detektionsprinzip ein nachgeordnetes Detektionspinhole 14 passieren können. In dem Multibanddetektor 3 wird das zurückkehrende Licht 4 bzw. das Fluoreszenzlicht gemäß seiner spektralen Eigenschaften in bekannter Weise weiterverarbeitet und wie bei der üblichen Vielfarben-Fluoreszenzmikroskopie simultan oder auch sequentiell detektiert.

Da der Holographic-Notch-Filter in der Lage ist, die Anregungswellenlänge des Anregungslichts 6 effizient auszufiltern, läßt sich eine weiterreichende Unterdrückung des sonst störenden Streulichts erreichen.

Des weiteren sei angemerkt, dass aufgrund der unterschiedlichen Emissionsintensitäten des Fluoreszenzlichts verschiedener Halbleiter-Nanokristalle es durchaus von Vorteil ist, ein konfokales Laserscanmikroskop mit einem AOBS zu verwenden. In Abhängigkeit der Emissionsintensitäten des Fluoreszenzlichts können verschiedene Halbleiter-Nanokristalle mit unterschiedlichen Wellenlängen angeregt werden, wobei dazu mehrere Lichtquellen erforderlich sind. Die detektierten Signale könnten dann ein etwa identisches Signal-zu-Rausch-Verhältnis aufweisen. Der zuvor genannten Holographic-Notch-Filter könnte dabei durch den AOBS ersetzt werden, so dass einzelne Laserwellenlängen in der Intensität variierbar sind.

Abschliessend sei ganz besonders darauf hingewiesen, dass das voranstehend erörterte Ausführungsbeispiel lediglich zur Beschreibung der beanspruchten Lehre dient, diese jedoch nicht auf das rein willkürlich gewählte Ausführungsbeispiel einschränkt.

## Patentansprüche

1. Laserscanmikroskop, vorzugsweise konfokales Laserscanmikroskop, mit einer Laserlichtquelle (1) zur Beleuchtung eines Objekts (2) und einem Detektor (3) zur Detektion des vom Objekt (2) zurückkehrenden Lichts (4), wobei das Objekt (2) bzw. Teile davon mit zur Emission anregbaren Markern (5) markiert ist,
**dadurch gekennzeichnet,** dass die Laserlichtquelle (1) Anregungslicht (6) mit im wesentlichen einer Wellenlänge aussendet, dass gleichzeitig unterschiedliche Marker (5) verwendet werden, die bei Bestrahlung mit Anregungslicht (6) im wesentlichen gleicher Wellenlänge Licht (7) unterschiedlicher Wellenlängen aussenden und dass der Detektor (3) als Multibanddetektor zur gleichzeitigen Detektion von Licht mit mehreren Wellenlängen ausgeführt ist.

2. Laserscanmikroskop nach Anspruch 1, dadurch gekennzeichnet, dass im Beleuchtungs-/Detektionsstrahlengang (8) ein optisches Bauteil (9) angeordnet ist, welches das von der Laserlichtquelle (1) kommende Anregungslicht (6) zum Objekt (2) hin reflektiert und Licht anderer Wellenlänge, insbesondere das vom Objekt (2) zurückkehrende Licht (4), zum Detektor (3) hin transmittieren läßt, wobei das optische Bauteil (9) als AOBS oder als Filter, insbesondere als Langpassfilter beziehungsweise als Holographic-Notch-Filter ausgeführt sein kann.

3. Laserscanmikroskop nach Anspruch 1 oder 2, dadurch gekennzeichnet, dass der Spektralbereich der einzelnen Kanäle des Multibanddetektors (3) auf die Wellenlängen des Emissionslichts (7) der Marker (5) einstellbar sind, wobei bei der Einstellung der Spektralbereiche der Detektionskanäle der Cross-Talk in den Detektionskanälen minimierbar sein kann.

4. Laserscanmikroskop nach einem der Ansprüche 1 bis 3, dadurch gekennzeichnet, dass es sich bei den Markern (5) um Halbleiter-Nanokristalle handelt, wobei die Halbleiter-Nanokristalle auf Anregung mit Anregungslicht (6) einer Wellenlänge Licht mit einer oder mit mehreren Wellenlänge emittieren.

5. Laserscanmikroskop nach einem der Ansprüche 1 bis 4, dadurch gekennzeichnet, dass es sich bei den Markern (5) um Fluorchrome handelt, die aufgrund ihres spezifischen Absorptionsspektrums von dem Anregungslicht (6) einer Wellenlänge zur Fluoreszenz anregbar sind.

6. Laserscanmikroskop nach einem der Ansprüche 1 bis 5, dadurch gekennzeichnet, dass mehrere Laserlichtquellen (1) vorgesehen sind, so dass die Marker (5) mit Anregungslicht (6) unterschiedlicher Wellenlängen anregbar sind.

7. Laserscanmikroskop nach einem der Ansprüche 1 bis 6, dadurch gekennzeichnet, dass die Anregung der Marker mit gepulstem Anregungslicht oder mit intensitätsmoduliertem Anregungslicht erfolgt, wobei das Anregungslicht mit dem Scan- und/oder Detektionsvorgang des Laserscanmikroskops synchronisierbar sein kann und wobei die Detektion des von den Markern emittierten Lichts vorzugsweise mit einem zeitlichen Versatz zur Anregung der Marker durchführbar ist, wobei der zeitliche Versatz zwischen der Anregung der Marker und der Detektion des von den Markern emittieren Lichts einstellbar ist.

8. Laserscanmikroskop nach einem der Ansprüche 1 bis 7, dadurch gekennzeichnet, dass insbesondere die im angeregten Zustand befindlichen Marker mit elektromagnetischer Strahlung einer zusätzlichen Energiequelle zusätzlich anregbar sind, wobei die elektromagnetische Strahlung vorzugsweise eine Wellenlänge aufweist, die aus einem Bereich wählbar ist, der sich vom Radio- bis hin zum UV-Wellenlängenbereich erstrecken kann, wobei die elektromagnetische Strahlung der zusätzlichen Energiequelle gepulst oder intensitätsmoduliert sein kann und vorzugsweise zu dem Scan- und/oder Detektionsvorgang des Laserscanmikroskops synchronisierbar ist, wobei die Puls- oder die Intensitätsmodulationsfolge der zusätzlichen elektromagnetischen Strahlung zur Puls- oder Intensitätsmodulationsfolge des Anregungslichts einen einstellbaren zeitlichen Versatz aufweisen kann.

9. Verfahren nach einem der Ansprüche 1 bis 8, dadurch gekennzeichnet, dass zum Nachweis vorzugsweise biologischer Objekte bzw. Objektstrukturen mittels Laserscanmikroskopie, wobei das Objekt mit einer Laserlichtquelle beleuchtet und das vom Objekt zurückkehrende Licht von einem Detektor detektiert wird und wobei das Obiekt bzw. die Objektstrukturen mit zur Emission anregbaren Markern markiert sind, insbesondere unter Verwendung eines Laserscanmikroskops nach einem der Ansprüche 1 bis 8,
**dadurch gekennzeichnet,** dass die Laserlichtquelle Anregungslicht mit einer Wellenlänge aussendet, dass gleichzeitig unterschiedliche Marker verwendet werden, die bei Bestrahlung mit Anregungslicht gleicher Wellenlänge Licht unterschiedlicher Wellenlängen aussenden und dass der Detektor als Multibanddetektor gleichzeitig Licht mit mehreren Wellenlängen detektiert.

10. Verfahren nach Anspruch 9, dadurch gekennzeichnet, dass ein im Beleuchtungs-/Detektionsstrahlengang angeordnetes optisches Bauteil das von der Laserlichtquelle kommende Anregungslicht zum Objekt hin reflektiert und Licht anderer Wellenlänge, insbesondere das vom Objekt zurückkehrende Licht, zum Detektor hin transmittiert.

11. Verfahren nach Anspruch 9 oder 10, dadurch gekennzeichnet, dass der Spektralbereich der einzelnen Kanäle des Multibanddetektors auf die Wellenlängen des Emissionslichts der Marker eingestellt wird, wobei bei der Einstellung der Spektralbereiche der Detektionskanäle der Cross-Talk in den Detektionskanälen minimiert sein kann.

12. Verfahren nach einem der Ansprüche 9 bis 11, dadurch gekennzeichnet, dass als Marker dienende Halbleiter-Nanokristalle auf Anregung mit Anregungslicht einer Wellenlänge Licht mit einer Wellenlänge oder mit mehreren Wellenlängen emittieren.

13. Verfahren nach einem der Ansprüche 9 bis 12, dadurch gekennzeichnet, dass die Marker mit gepulstem Anregungslicht oder mit intensitätsmoduliertem Anregungslicht angeregt werden, wobei das Anregungslicht mit dem Scan- und/oder Detektionsvorgang des Laserscanmikroskops synchronisiert werden kann, wobei die Detektion des von den Markern emittierten Lichts mit einem zeitlichen Versatz zur Anregung der Marker durchgeführt werden kann und wobei der zeitliche Versatz zwischen der Anregung der Marker und der Detektion des von den Markem emittieren Lichts derart eingestellt wird, dass die Signalausbeute maximiert wird.

14. Verfahren nach einem der Ansprüche 9 bis 13, dadurch gekennzeichnet, dass insbesondere die im angeregten Zustand befindlichen Marker mit elektromagnetischer Strahlung einer zusätzlichen Energiequelle zusätzlich angeregt werden, wobei die elektromagnetische Strahlung vorzugsweise eine Wellenlänge aufweist, die aus einem Bereich gewählt wird, der sich vom Radio- bis hin zum UV-Wellenlängenbereich erstrecken kann, wobei als elektromagnetische Strahlung die gepulste Strahlung oder eine intensitätsmodulierte Strahlung verwendet wird.

15. Verfahren nach einem der Anspruch 14, dadurch gekennzeichnet, dass die elektromagnetische Strahlung der zusätzlichen Energiequelle zu dem Scan-und/oder Detektionsvorgang des Laserscanmikroskops synchronisiert wird, wobei zwischen der Puls- oder Intensitätsmodulationsfolge der elektromagnetischen Strahlung und der Puls- oder Intensitätsmodulationsfolge des Anregungslichts ein zeitlicher Versatz eingestellt werden kann.
